# EUROPEAN PATENT APPLICATION

(11) **EP 4 528 886 A1**
(43) Date of publication of application: **26.03.2025**
(21) Application number: 23806964.5
(22) Date of filing: 17.05.2023
(51) Int. Cl.: H01M 10/613, H01M 10/6567, C09K 5/10

(54) **THERMAL MANAGEMENT METHOD**

(30) Priority: 18.05.2022 US 202263343423 P
(71) Applicant: T-Global Technology Co., Ltd., Taoyuan, Taiwan 330058 (TW)
(72) Inventor: HUNG, Tsan-Hao, Taoyuan City, Taiwan 330058 (TW); LIN, Wei-Keng, Taoyuan City, Taiwan 330058 (TW); WU, Hsin-Ming, Taoyuan City, Taiwan 330058 (TW); CHENG, Weng-Liang, Taoyuan City, Taiwan 330058 (TW); HSIAO, Yung-chin, Taoyuan City, Taiwan 330058 (TW); HSIAO, Ming-Hsien, Taoyuan City, Taiwan 330058 (TW)
(74) Representative: Laddé, Jurre Gerard
(86) International application number: PCT/CN2023/094690
(87) International publication number: WO 2023/222013

(57) **Abstract**

A passive thermal managing method adopts immersion cooling for a battery pack, comprising: providing a battery pack, comprising a thermal conducting shell, a plurality of battery cells, and a circulation space, wherein the battery cells and the convection space are in the thermal conducting shell; vacuuming the battery pack; immersing the battery cells with a dielectric liquid, wherein a natural circulation of the dielectric liquid is formed in the circulation space for transferring heat, wherein the dielectric liquid comprises a plurality of fillers for reducing a viscosity of the dielectric liquid.

## Description

### BACKGROUND OF THE INVENTION

### 1. Field of the Invention

The present invention relates to a thermal managing method, particularly to a thermal managing method for a battery pack.

### 2. Description of the Prior Art

The conventional immersion cooling in flowing fluid shows excellent cooling performance, but needs a second circuit in the vehicle air conditioner and high pump power to cool the viscous immersion liquid.

### SUMMARY OF THE INVENTION

The purpose of an embodiment of the invention is to adopt immersion cooling for providing a passive thermal managing method, comprising:
providing a battery pack, comprising a thermal conducting shell, a plurality of battery cells, and a circulation space, wherein the battery cells and the convection space are in the thermal conducting shell;
vacuuming the battery pack;
immersing the battery cells in a dielectric liquid, wherein a natural circulation of the dielectric liquid is formed in the circulation space for transferring heat, wherein the dielectric liquid comprises a plurality of fillers for reducing a viscosity of the dielectric liquid.

### BRIEF DESCRIPTION OF THE DRAWINGS

The invention as well as a preferred mode of use and advantages thereof will be best understood by referring to the following detailed description of an illustrative embodiment in conjunction with the accompanying drawings, wherein:
FIG. 1 illustrates an embodiment of the invention, a thermal managing method;
FIG. 2 illustrates a method for mixing the dielectric liquid and the functional fillers according to an embodiment of the invention;
FIG. 3 illustrates another method for mixing the dielectric liquid and the functional fillers according to an embodiment of the invention.

### DETAILED DESCRIPTION OF THE PREFERRED EMBODIMENTS

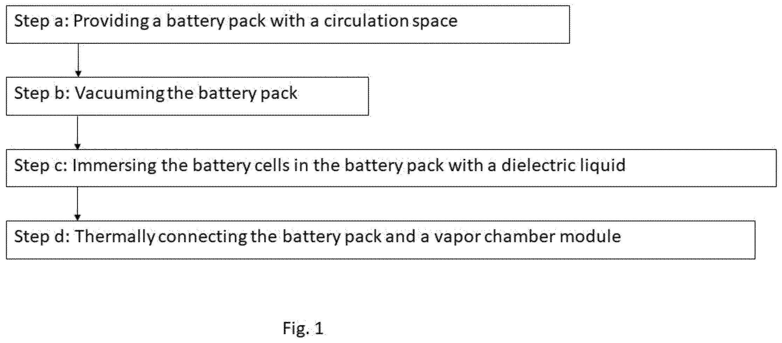

Fig. 1 illustrates an embodiment of the invention, a thermal managing method. In Step a, a battery pack with a circulation space is provided. In an embodiment, , a battery pack comprises a thermal conducting shell, such as an aluminum shell, multiple battery cells inside the thermal conducting shell, and a circulation space among the battery cells and the thermal conducting shell.

In Step b, the battery pack is vacuumed to remove the air in the circulation space.

In Step c, the dielectric liquid is used to fill the circulation space and then the battery cells are immersed in the dielectric liquid. In an embodiment, functional fillers are used to enhance the properties of the dielectric liquid, such as reducing the viscosity, or increasing the relative dielectric constant. In an embodiment, the reduced viscosity is low enough to form natural circulation to dominate the heat transferring of the dielectric liquid.

In Step d, vapor chambers are thermally connected to the thermal conducting shell of the battery pack. Both the two-phase flow heat transfer in the vapor chambers and the natural circulation of the dielectric liquid are adopted to carry out a passive thermal management, internally and externally.

In an embodiment, silane coupling agent is used to modify the surface of the microscale A1203 filler particles for reducing the particle agglomeration and lowering the internal friction of inter-particle motion in the liquid. In an embodiment, coupling agent treatment can improve the e rheological behavior of the liquid to make the filler particles capable of being distributed more uniformly in the liquid.

In an embodiment, in the circulation space, the surface treatment of filler particles with coupling agents enables the dielectric liquid to generate natural circulation, caused by the temperature rising of the battery cells. The natural circulation can transfer the heat from the battery cells to the thermal conducting shell.

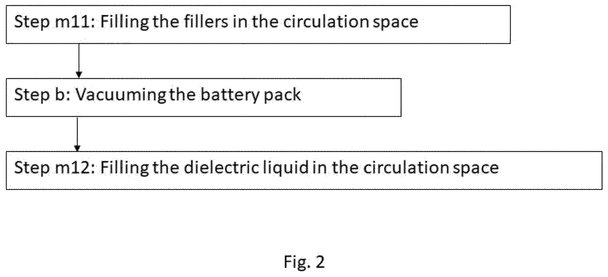

Fig. 2 illustrates a method for mixing the dielectric liquid and the functional fillers according to an embodiment of the invention. In Step m11, filler particles are filled in the circulation space, followed by Step b, vacuuming the battery pack. And then in Step m12, the dielectric liquid is filled in the circulation space to be uniformly mixed with the filler particles.

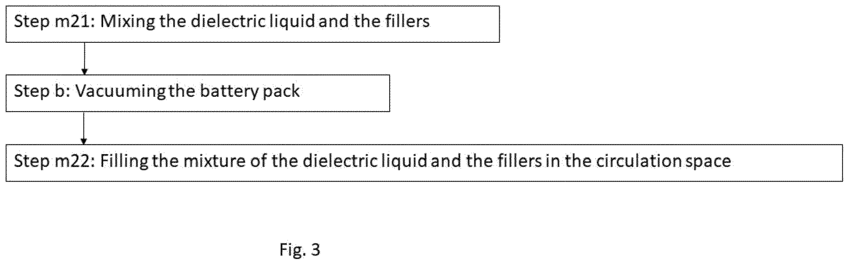

Fig. 3 illustrates another method for mixing the dielectric liquid and the functional fillers according to an embodiment of the invention. In Step m21, the dielectric liquid and the filler particles are uniformly mixed, followed by Step b, vacuuming the battery pack. And then in Step m22, the mixture of the dielectric liquid and the filler particles are filled in the circulation space.

## Claims

1. A thermal managing method, comprising:
providing a battery pack, comprising a thermal conducting shell, a plurality of battery cells, and a circulation space, wherein the battery cells and the convection space are in the thermal conducting shell;
vacuuming the battery pack;
immersing the battery cells in a dielectric liquid, wherein a natural circulation of the dielectric liquid is formed in the circulation space for transferring heat, wherein the dielectric liquid comprises a plurality of fillers for reducing a viscosity of the dielectric liquid.

2. The thermal managing method as in claim 1, further comprising:
providing a vapor chamber, thermally connected to the thermal conducting shell, wherein a two-phase flow heat transfer occurs in the vapor chamber.

3. The thermal managing method as in claim 1, further comprising:
uniformly mixing the dielectric liquid and the fillers.

4. The thermal managing method as in claim 1, wherein the dielectric liquid comprises the fillers for increasing a relative dielectric constant of the dielectric liquid.
